# EUROPÄISCHE PATENTSCHRIFT

(11) **EP 1 097 629 B1**
(45) Veröffentlichungstag und Bekanntmachung des Hinweises auf die Patenterteilung: **21.09.2005**
(21) Anmeldenummer: 00123035.8
(22) Anmeldetag: 24.10.2000
(51) Int. Cl.: A01F 15/10

(54) **Schneckenförderer für eine Erntebergungsmaschine**
Screw conveyor for a harvesting machine
Transporteur à vis pour une machine de récolte

(30) Priorität: 08.11.1999 US 436329
(43) Veröffentlichungstag der Anmeldung: 09.05.2001
(73) Patentinhaber: DEERE & COMPANY, Moline, Illinois 61265-8098 (US)
(72) Erfinder: Anstey, Henry Dennis, Ottumwa, IA 51501 (US); Engel, Manfred, 66484 Grosssteinhausen (DE)
(74) Vertreter: Magin, Ludwig Bernhard

(56) Entgegenhaltungen:
- EP-A- 0 803 184
- EP-A- 0 815 720
- DE-C- 3 622 738
- GB-A- 1 343 031
- GB-A- 2 092 086

## Beschreibung

Die Erfindung betrifft eine Erntebergungsmaschine mit einem Aufnehmer und einem oberschlächtig wirkenden Förderer mit wenigstens einer stromabwärts des Aufnehmers angeordneten Förderschnecke die auf einen Schneckenkern aufgesetzte Wendel enthält und von dem Aufnehmer herangeführtes Gut zu einem Gutstrom verschmälert.

Aus der US-A-5,848,523 ist eine Rundballenpresse bekannt, die zwischen einem Gutaufnehmer und einer Ballenbildungskammer eine Fördervorrichtung aufweist. Die Fördervorrichtung setzt sich aus seitlichen Schnecken und einem dazwischen liegenden Mitnehmerrotor mit einem den Schnecken gegenüber größeren Außendurchmesser zusammen, die koaxial zueinander angeordnet sind.

Das der Erfindung zugrunde liegende Problem wird in dem schwierigen Gutübergang zwischen den Schneckenwendeln und dem Mitnehmerrotor gesehen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird das Fördergut aus dem Schneckengrund an dem Schneckenkern radial nach außen befördert und gelangt sicher zu stromabwärts gelegenen Stellen auf einem weiteren Förderer, in einen Kanal oder dergleichen.

Wenn sich die Räumplatte bis an den Außendurchmesser der Förderschnecke erstreckt, wird das Fördergut so weit wie möglich radial nach außen bewegt und kann ohne Behinderung seiner Axialbewegung auf den Förderer gelangen.

Wenn die Räumplatte mit der Wendel verbunden ist, ergibt sich eine Erhöhung der Biegesteifigkeit sowohl der Wendel wie auch der Räumplatte, so daß auch unter schwierigen Erntebedingungen ein Schaden an der Förderschnecke nicht zu befürchten ist.

Wenn die Räumplatte geradlinig und parallel zu der Erstreckung des Schneckenkerns an diesem angreift, ist aufgrund der Formgebung der Räumplatte deren Fertigung einfach, und es findet ein gleichmäßiger Übergang des Förderguts von dem Schneckenkern auf die Räumplatte statt, was den Gutfluß verbessert.

Unter den vielen denkbaren Formgebungen der Räumplatte, z. B. glatt, konkav, etc., ist die spiralförmige deshalb von Vorteil, weil sie einen progressiven Verlauf aufweist und das einmal aufgenommene Fördergut während der Förderung beschleunigt. Wenn hier der Begriff "spiralförmig" verwendet wird, so bezieht sich dies in den meisten Fällen auf eine Formgebung, die einem Teil eines Spiralbogens entspricht. Die Krümmung nach außen führt zu einer Art Abwurfbewegung des Guts.

In Erntebergungsmaschinen gefördertes Gut ist gewöhnlich Halmgut, das sich aufgrund seiner Struktur und seiner Säfte gerne in Kammern, Öffnungen etc. anlagert und zu Verstopfungen führt. Dieses Problem wird durch die Verwendung einer Einsatzplatte vermieden, die die Kammer zwischen dem Schneckenkern und der Räumplatte verschließt.

Eine gleichmäßige Förderung des Ernteguts und eine Erhöhung der Förderkapazität wird dadurch erreicht, daß zwei Wendel und mit diesen zusammenwirkende Räumplatten vorgesehen sind.

Eine Erstreckung der Räumplatte über ein Drittel des inneren Schneckenumfangs stellt eine ausreichende Ausräumbewegung bei noch vertretbarer Steigung der Räumplatte sicher.

Wenn die Förderschnecke mit ihrer Räumplatte so ausgebildet ist, daß sie wenigstens bis an den Umlaufkreis von Mitnehmern heranreichen, die das Gut weiterleiten und axial auf die Förderschnecke folgen, findet ein ungehinderter axial gerichteter Übergang zwischen der Förderschnecke und dem Förderer statt.

Eine koaxiale Lagerung der Förderschnecke und des Förderers und gegebenenfalls deren gemeinsamer Antrieb wird auf einfache Weise dadurch erreicht, daß diese auf einer gemeinsamen Achse oder Welle angeordnet sind.

Ein optimaler Gutfluß findet bei geometrischen Beziehungen statt, die vorsehen, daß der Durchmesser des Schneckenkerns im wesentlichen die Hälfte des Durchmessers der Förderschnecke beträgt und die Räumplatte unter einem konstanten Radius verläuft, dessen Mitte auf einer Radialen durch die Drehachse des Schneckenkerns liegt.

Eine ungestörte Weitergabe des Ernteguts z. B. in einen Ballenpreßraum wird dadurch erzielt, daß unmittelbar auf die Förderschnecke und damit auch auf den Förderer ein Förderelement folgt, das das Erntegut annimmt und im wesentlichen in derselben Richtung weiterleitet. Auf die Förderschnecke kann grundsätzlich jede Art von Förderer folgen, also eine Rolle, Riemen, Kette mit Förderstäben, etc.

Angesichts der meist stengeligen oder blättrigen Struktur des Förderguts werden Verstopfungen beim Übergang auf den nachfolgenden Förderer vermieden, wenn zu diesem ein Spalt von 5 - 25 mm, vorzugsweise aber 15 mm bleibt. Der Minimalspalt stellt sicher, daß es bei übermäßiger Belastung der jeweiligen Komponenten nicht zu Berührungen und Schäden kommt.

In der Zeichnung ist ein nachfolgend näher beschriebenes Ausführungsbeispiel der Erfindung dargestellt. Es zeigt:
- Fig. 1: eine Erntebergungsmaschine in Seitenansicht mit einem Aufnehmer in schematischer Darstellung,
- Fig. 2: den Aufnehmer in Seitenansicht mit einer darüber geförderten Erntegutmatte,
- Fig. 3: den Aufnehmer in Draufsicht,
- Fig. 4: den Aufnehmer in einer perspektivischen Darstellung von vorne links nach hinten rechts,
- Fig. 5: eine Förderschnecke des Aufnehmers in einer perspektivischen Darstellung und
- Fig. 6: die Förderschnecke in Seitenansicht.

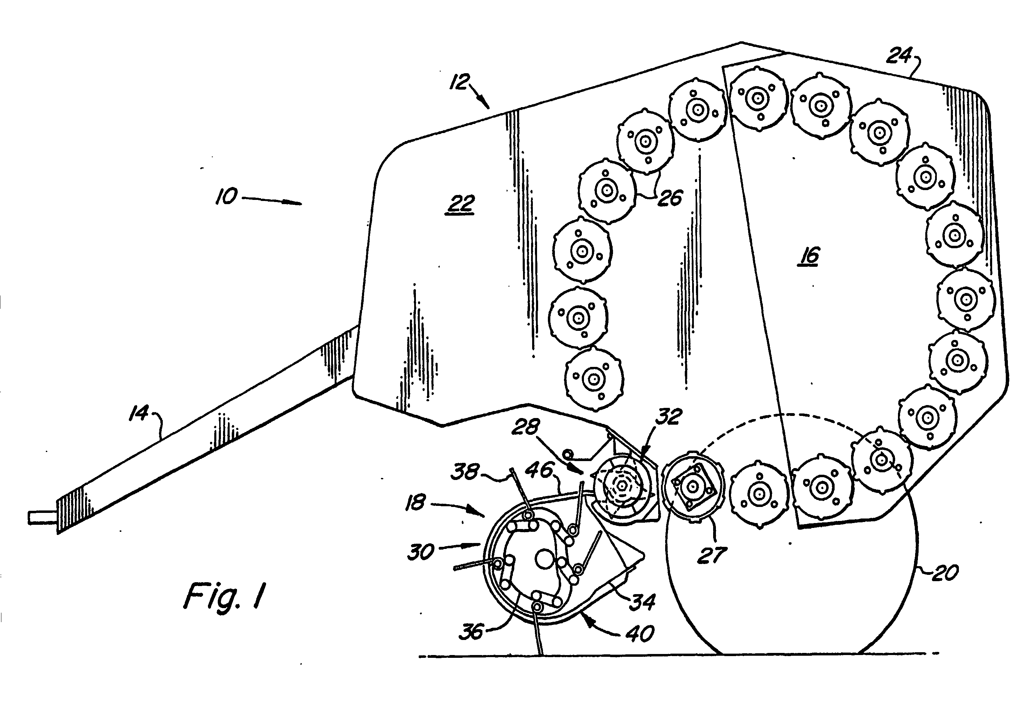

In Figur 1 ist eine Erntebergungsmaschine 10 in der Form einer Rundballenpresse zum Herstellen großer zylindrischer Ballen gezeigt. Die Erntebergungsmaschine 10 weist ein Fahrgestell 12 auf, von dem aus sich eine Zugdeichsel 14 erstreckt, die so ausgebildet ist, daß sie an ein nicht gezeigtes Zugfahrzeug, wie etwa einen landwirtschaftlichen Ackerschlepper, angeschlossen werden kann. Das Fahrgestell 12 trägt Ballenbildungselemente, die weiter unten beschrieben werden und eine Ballenbildungskammer 16 mit einem konstanten Volumen bestimmen, in die mittels einer Gutzuführungsvorrichtung 18 Erntegut eingespeist wird, sobald die Erntebergungsmaschine 10 auf Rädern 20 fortbewegt wird. Das Fahrgestell 12 enthält einen vorderen Abschnitt 22, an dessen rückwärtigen oberen Eckbereich ein Entladegatter 24 schwenkbar angebracht ist, das aus der gezeigten unteren geschlossenen Stellung vertikal geschwenkt werden kann, um es einem gebildeten Ballen zu ermöglichen, auf den Boden zu fallen, wie dies im Stand der Technik gut bekannt ist. Die Ballenbildungskammer 16 wird von einer Vielzahl identischer Rollen 26, die im allgemeinen in einer kreisförmigen Anordnung untergebracht sind, und von Seitenwänden des vorderen Abschnitts 22 und des Entladegatters 24 gebildet. In dieser kreisförmigen Anordnung befindet sich auch ein Förderelement 27 in der Art einer geringfügig größeren Rolle, das den rückwärtigen Bereich eines Ernteguteinlasses 28 begrenzt. Während die so gebildete Ballenbildungskammer 16 in ihrer Größe konstant ausgebildet ist, könnte die vorliegende Erfindung auch bei einer Erntebergungsmaschine 10 mit einer größenveränderlichen Ballenbildungskammer 16 angewendet werden, wobei das Förderelement 27 eine Bodenrolle darstellen würde oder von einer Ausgestaltung wäre, die als die untere vordere Rolle zum Tragen von Preßriemen dient. Jedenfalls enthält die Ballenbildungskammer 16 den Ernteguteinlaß 28, durch den Erntegut von der Gutzuführungsvorrichtung 18 gefördert werden kann.

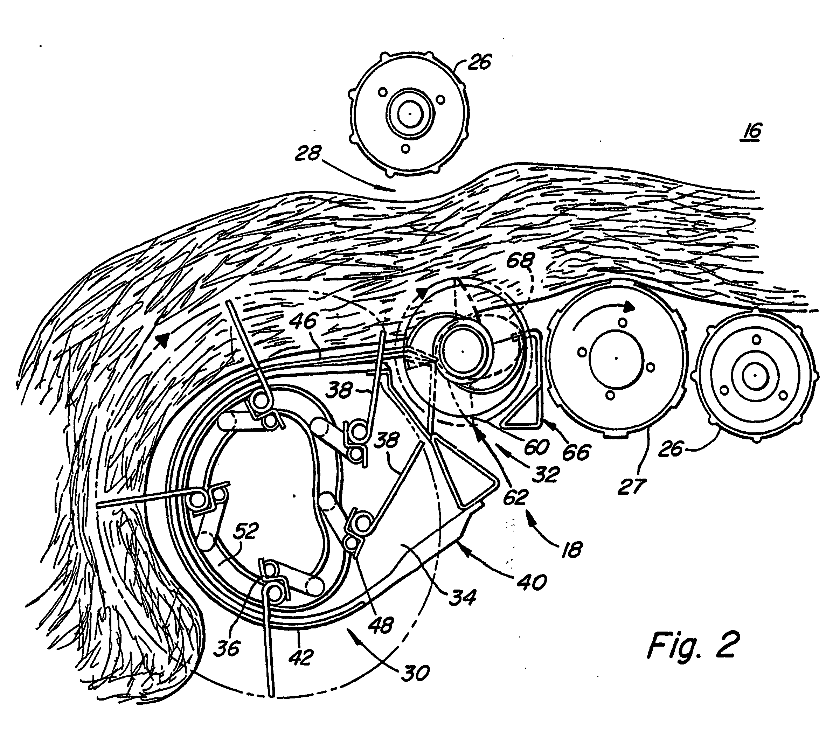

Gemäß den Figuren 2 bis 4 hat die Gutzuführungsvorrichtung 18 eine größere Breite als die Ballenbildungskammer 16. Die Gutzuführungsvorrichtung 18 wird aus einem das Erntegut zusammenführenden Aufnehmer 30 und einem drehenden Förderer 32 gebildet. Der Aufnehmer 30 ist von herkömmlicher Bauweise mit einem Rahmen 34, der von dem Fahrgestell 12 getragen wird. Der Aufnehmer 30 enthält eine mit Zinken 38 bestückte Haspel 36 mit fünf Satz Zinken 38 aus Federdraht, die um eine horizontal verlaufende und quer ausgerichtete Drehachse der Haspel 36 winkelmäßig versetzt sind, wobei die einzelnen Zinken 38 jedes Satzes in koplanaren Ebenen gruppiert sind, die quer über den Aufnehmer 30 mit Abstand zueinander angeordnet sind. Ein Zusammenbau aus U-förmigen Abstreifern 40 öffnet sich nach hinten und erstreckt sich um die Haspel 36, wobei die Abstreifer 40 einzelne Streifen 42 aufweisen, die in der Querrichtung einen Abstand zueinander aufweisen, um eine Vielzahl von Schlitzen 44 zu bilden, durch die sich die koplanaren Sätze von Zinken 38 während des Betriebs erstrecken. Dabei ist zu verstehen, daß das Erntegut entlang einer Oberfläche 46 gleitet, die von den Streifen 42 bis zu dem Punkt definiert wird, an dem das Erntegut von dem drehenden Förderer 32 erfaßt wird.

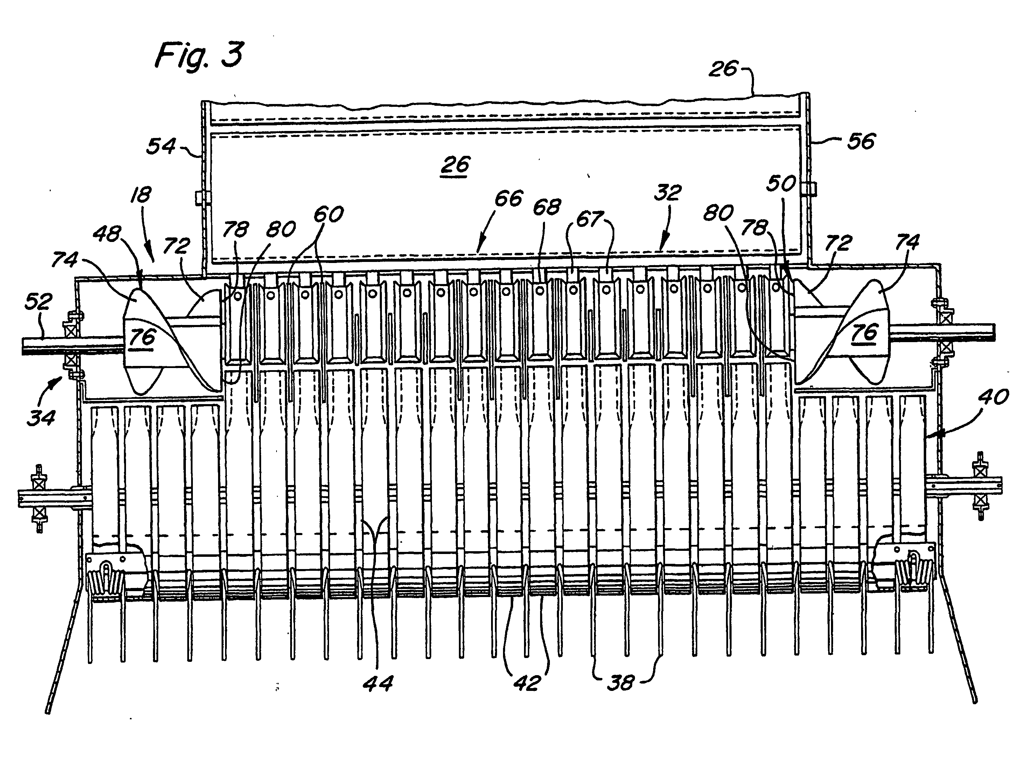

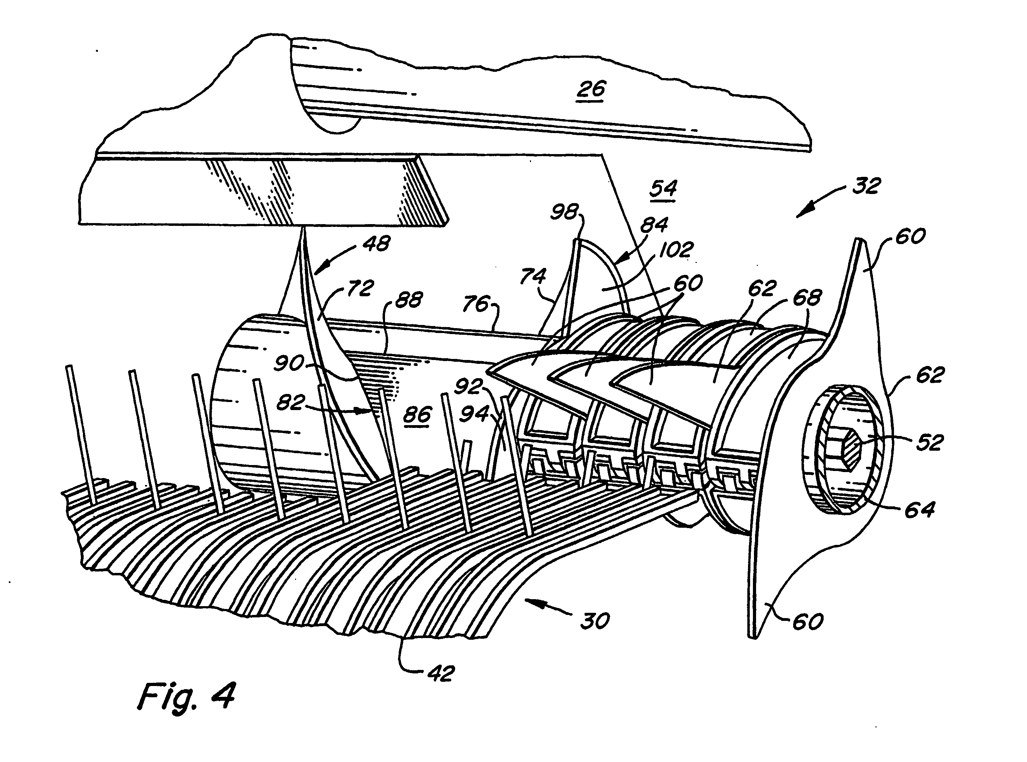

Der drehende Förderer 32 enthält rechte und linke Förderschnecken 48, 50, die als Stummelschnecken ausgebildet sind und einen rohrartigen Kern aufweisen, der zur Drehung mit einer sechskantigen Antriebswelle 52 (Fig. 4) verbunden ist, die sich durch den Schneckenkern erstreckt. Die Förderschnecken 48 und 50 weisen jeweils innere Enden auf, die mit Bezug auf rechte und linke Seitenwände 54 und 56 (Fig. 3) des vorderen Abschnitts 22 der Innenseite zugelegen enden, wobei die Seitenwände 54, 56 die sich gegenüberliegenden Wandbereiche der Ballenbildungskammer 16 darstellen. In dem dargestellten Ausführungsbeispiel beträgt der Abstand, um den sich die Förderschnecken 48, 50 nach innen über die Seitenwände 54, 56 hinaus erstrecken, ungefähr 95 mm. Zwischen den inneren Enden der Förderschnecken 48 und 50 und konzentrisch zu der Antriebswelle 52 ist ein weiterer Teil des Förderers 32 angeordnet, der hier in der Art einer Vielzahl steifer Mitnehmer 60 in der Form von Fingern oder Zähnen zum Fördern des Ernteguts ausgebildet ist, wobei sich koplanare Paare der Mitnehmer 60 an diametral gegenüberliegenden Stellen einer jeweiligen Platte 62 befinden, und wobei die Platten 62 mit einem Abstand zueinander entlang eines Tragrohr 64 auf dieses aufgeschweißt sind, das mit nicht gezeigten Endplatten versehen ist, die drehfest mit der Antriebswelle 52 verbunden sind. Den Mitnehmern 60 ist ein Abstreiferzusammenbau 66 (Fig. 2) zugeordnet, der einen Abstreiferhalter 67 aufweist, der sich wiederum quer rückwärtig einer Vielzahl von Abstreifern 68 erstreckt, die sich jeweils in Längsausrichtung mit den Abstreifern 40 befinden. Jeder Abstreifer 68 ist aus einem Kunststoffmaterial gegossen und aus oberen und unteren Hälften gebildet, die ineinandergreifende vordere Enden aufweisen, die ein Scharnier bilden, das es ermöglicht, die Hälften voneinander zu trennen. Die obere und die untere Hälfte jedes Abstreifers 68 enthalten in Seitenansicht gesehen entsprechende halbzylindrische Aussparungen, die zusammen eine zylindrische Öffnung bilden, die sich selbst unmittelbar rückwärtig des vorderen Endes des Abstreifers 68 befindet, der lose um das Tragrohr 64 herum zwischen benachbarten Platten 62 derart angeordnet ist, daß das vordere Ende des Abstreifers 68 lose von dem Tragrohr 64 getragen wird. Die rückwärtigen Enden der oberen und unteren Hälften jedes Abstreifers 68 wirken zusammen, um eine rechteckige Öffnung zu bilden, in der eine Haltenase des Abstreiferhalters 67 aufgenommen wird. Eine nicht gezeigte Befestigungsschraube erstreckt sich durch fluchtende Löcher, die in den Hälften des Abstreifers 68 und in der Haltenase vorgesehen sind, um so den Abstreifer 68 an dem Abstreiferhalter 67 zu befestigen. Eine gekrümmte obere Fläche 70 jedes Abstreifers 68 steht in Kontakt mit dem Erntegut, das von den nahegelegenen Mitnehmern 60 getragen wird, um es so allmählich von den Mitnehmern 60 anzuheben.

Die vorliegende Erfindung bezieht sich auf rechte und linke Gutheber- oder Guträumerzusammenbauten, die jeweils an den inneren Endbereichen der Förderschnecke 48 und 50 befestigt sind. Im einzelnen sind die Förderschnecken 48 und 50 als Doppelwendelschnecken ausgebildet, die erste und zweite Wendel 72 und 74 enthalten, die auf den Umfang eines zylindrischen Schneckenkerns 76 aufgeschweißt sind und entsprechende Abschlußenden 78 und 80 aufweisen, die sich radial von diametral gegenüberliegenden Stellen des Schneckenkerns 76 aus erstrecken.

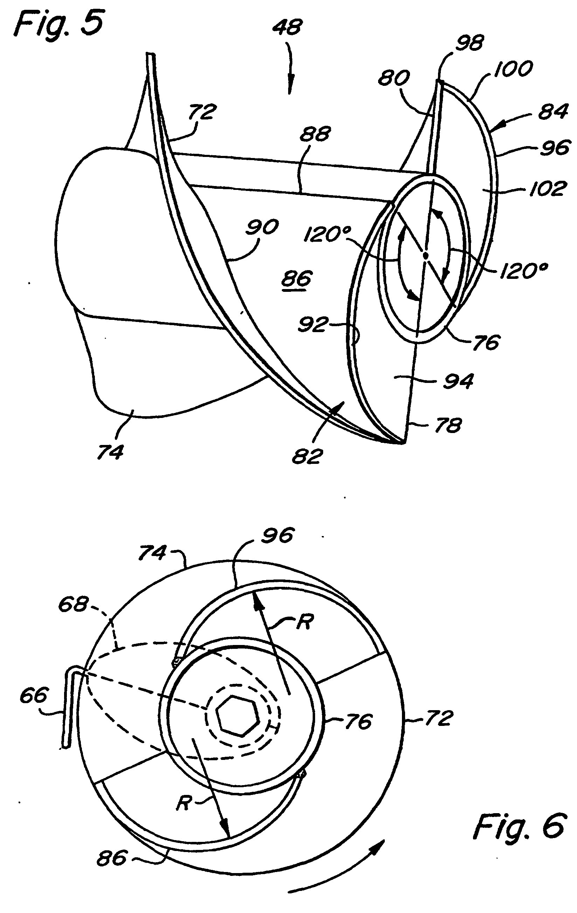

Mit Bezug auf die rechte Förderschnecke 48 ist in den Figuren 4 und 5 zu erkennen, daß der Gutheber- oder Guträumerzusammenbau der Förderschnecke 48 erste und zweite Guträumer 82 bzw. 84 enthält, die mit dem Schneckenkern 76 und mit entsprechenden Endabschnitten der Wendel 72, 74 verbunden sind, die an den innenliegenden Endabschnitt des Schneckenkerns 76 angebracht sind.

Im einzelnen enthält der Guträumer 82 eine spiralförmige Räumplatte 86 oder Hebeplatte mit einem radial innenliegenden Ende 88, das sich parallel zu der Achse des Schneckenkerns 76 erstreckt und an diesen angeschweißt ist. Die Räumplatte 86 enthält eine erste Kante 90, die an einer voreilenden Seite des inneren Endabschnitts der Wendel 72 angeschweißt ist, und eine zweite Kante 92, die im wesentlichen koplanar zu einem inneren Ende des Schneckenkerns 76 verläuft. Die Kanten 90 und 92 konvergieren dann zueinander und treffen sich an einem Punkt an einer Stelle auf der Peripherie des Endes der Wendel 72, die ausgehend von dem Ende ungefähr 120 Grad um die Achse des Schneckenkerns 76 entfernt gelegen ist. Eine im wesentlichen vertikal verlaufende Einsatzplatte 94 schließt den Raum zwischen der Kante 92 und dem Schneckenkern 76.

In gleicher Weise enthält der Guträumer 84 eine spiralförmige Hebeplatte oder Räumplatte 96 mit einer ersten Kante 98, die an einer voreilenden Seite des inneren Endabschnitts der Wendel 74 angeschweißt ist, und mit einer zweiten Kante 100, die im wesentlichen koplanar zu dem inneren Ende des Schneckenkerns 76 verläuft, wobei die erste und die zweite Kante 98 und 100 zueinander konvergieren und sich an einem Punkt an einer Stelle auf der äußeren Peripherie des Endes der Wendel 74 treffen. Eine im wesentlichen vertikal verlaufende Einsatzplatte 102 schließt den Raum zwischen dem Schneckenkern 76 und Räumplatte 96.

Wenn man - wie es in den Figuren 4 und 5 gezeigt ist - zu dem inneren Ende der Förderschnecke 48 hinschaut, dreht diese im Uhrzeigerdrehsinn, so daß das Ende 88 der Räumplatte 86 und die entsprechende Kante der Räumplatte 96 den verbleibenden Teilen der Räumplatten 86 und 96 voreilen, so daß erfaßtes Gut, und zwar entweder solches, das von den Förderschnecken 48, 50 nach innen gefördert wurde, oder solches, das von dem Aufnehmer 30 rückwärtig gefördert wurde, allmählich zu dem äußeren Umkreis der Wendel 72, 74 angehoben wird und somit auch zu dem äußeren Umfangskreis der rotierenden Mitnehmer 60. Die Länge und die Krümmung der Räumplatten 86 und 96 ist derart, daß es für das Erntegut einfacher ist, von dem Schneckenkern 76 und den Wendeln 72, 74 angehoben zu werden, als zwischen den Wendeln 72, 74 und dem Abstreiferzusammenbau 66 oder den Mitnehmern 60 eingeklemmt zu werden. Die gekrümmten oberen Flächen 70 der beiden Abstreifer 68, die jeweils an den inneren Enden der Förderschnecken 48, 50 vorgesehen sind, helfen das Erntegut anzuheben. Zusätzlich zu der Wirkung der Abstreifer 68, wird das Abstreifen des Ernteguts von den Räumplatten 86 und 96 durch das Förderelement 27 der Ballenbildungskammer 16 unterstützt, und zwar aufgrund deren Drehbewegung im Uhrzeigerdrehsinn, wie dies durch den Pfeil in Figur 2 angezeigt ist, und aufgrund ihrer unmittelbaren Nähe zu dem Außendurchmesser der Förderschnecken 48, 50. Im einzelnen wurde eine Gutabstreifwirkung dann festgestellt, wenn der Raum zwischen dem Außendurchmesser der Förderschnecken 48, 50 und dem Förderelement 27 in dem Bereich von 5 - 25 mm, aber vorzugsweise bei 15 mm liegt. Die Krümmung der Räumplatten 86, 96 kann gleich der einer Spirale sein, wie dies gezeigt ist, oder sie kann auch konstant sein, sobald ein bestimmter Abstand zu dem Schneckenkern 76 erreicht ist; die wirksamste Form hängt von den Bedingungen des Ernteguts ab.

In Bezug auf die in Figur 6 gezeigte linke Förderschnecke 50 ist zu erkennen, daß der Schneckenkern 76 einen Durchmesser aufweist, der ungefähr dem halben Durchmesser der Förderschnecke 50 entspricht. Es ist ferner zu erkennen, daß die Räumplatten 86 und 96 jeweils unter einem konstanten Radius ausgebildet sind, wobei das Zentrum jedes Radius parallel zu einer Linie gelegen ist, die sich durch das Zentrum des Schneckenkerns 76 erstreckt und mit den inneren Abschlußenden 78 und 80 der Wendel 72 und 74 fluchtet. Dieser Radius beträgt ungefähr 2/3 des Radius der Förderschnecke 50. Während es sich hierbei um bevorzugte Abmessungen des Schneckenkerns 76, der Wendel 72, 74 und der Räumplatten 86, 96 handelt, würden auch andere Verhältnisse zu einem zufriedenstellenden Betrieb führen.

## Patentansprüche

1. Erntebergungsmaschine (10) mit einem Aufnehmer (30) und einem oberschlächtig wirkenden Förderer (32) mit wenigstens einer stromabwärts des Aufnehmers (30) angeordneten Förderschnecke (48, 50), die auf einen Schneckenkern (76) aufgesetzte Wendel (72, 74) enthält und von dem Aufnehmer (30) herangeführtes Gut zu einem Gutstrom verschmälert, **dadurch gekennzeichnet, daß** in dem abgabeseitigen Endbereich der Förderschnecke (48, 50) ein Guträumer (82, 84) mit einer Räumplatte (86, 96) vorgesehen ist, die sich zwischen dem Schneckenkern (76), dem axialen Ende der Förderschnecke (48, 50) und einer voreilenden Seite der Wendel (72, 74) erstreckt.

2. Erntebergungsmaschine nach Anspruch 1, **dadurch gekennzeichnet, daß** die Räumplatte (86, 96) an dem innenliegenden Ende der Förderschnecke (48, 50) an deren Außendurchmesser endet.

3. Erntebergungsmaschine nach Anspruch 1 oder 2, **dadurch gekennzeichnet, daß** eine nachlaufende Kante (90) der Räumplatte (86, 96) an einer voreilenden Fläche der Wendel (72, 74) angreift.

4. Erntebergungsmaschine nach einem oder mehreren der vorherigen Ansprüche, **dadurch gekennzeichnet, daß** eine voreilende Kante (88) der Räumplatte (86, 96) im wesentlichen parallel zu der Drehachse der Förderschnecke (48, 50) verläuft.

5. Erntebergungsmaschine nach einem oder mehreren der vorherigen Ansprüche, **dadurch gekennzeichnet, daß** die Räumplatte (86, 96) von dem Schneckenkern (76) spiralförmig nach außen verläuft.

6. Erntebergungsmaschine nach einem oder mehreren der vorherigen Ansprüche, **dadurch gekennzeichnet, daß** sich zwischen der Räumplatte (86, 96) und dem Schneckenkern (76) eine Einsatzplatte (94, 102) erstreckt.

7. Erntebergungsmaschine nach einem oder mehreren der vorherigen Ansprüche, **dadurch gekennzeichnet, daß** die Förderschnecke (48, 50) zwei um 180 Grad versetzte Wendel (72, 74) enthält, denen jeweils eine Räumplatte (86, 96) zugeordnet ist.

8. Erntebergungsmaschine nach einem oder mehreren der vorherigen Ansprüche, **dadurch gekennzeichnet, daß** sich die Räumplatte (86, 96) über ca. 120 Grad des Umfangs des Schneckenkerns (76) erstreckt.

9. Erntebergungsmaschine nach einem oder mehreren der vorherigen Ansprüche, **dadurch gekennzeichnet, daß** axial auf wenigstens eine Förderschnecke (48, 50) folgend wenigstens ein rotierender Mitnehmer (60) vorgesehen ist, wobei die Erstreckung der Räumplatte (86, 96) während des Umlaufs wenigstens bis zur Höhe des Mitnehmers (60) reicht.

10. Erntebergungsmaschine nach einem oder mehreren der vorherigen Ansprüche, **dadurch gekennzeichnet, daß** die Förderschnecke(n) (48, 50) und der Mitnehmer (60) auf einer gemeinsamen Antriebswelle (52) gelagert sind und vorzugsweise gemeinsam durch diese angetrieben werden.

11. Erntebergungsmaschine nach einem oder mehreren der vorherigen Ansprüche, **dadurch gekennzeichnet, daß** der Durchmesser des Schneckenkerns (76) im wesentlichen die Hälfte des Durchmessers der Förderschnecke (48, 50) beträgt und die Räumplatte (86, 96) unter einem konstanten Radius verläuft, dessen Mitte auf einer Radialen durch die Drehachse des Schneckenkerns (76) und entlang des Endes der Wendel (72, 74) liegt

12. Erntebergungsmaschine nach einem oder mehreren der vorherigen Ansprüche, **dadurch gekennzeichnet, daß** stromabwärts der Förderschnecke(n) (48, 50) ein Förderelement (27) mit einer aufwärts und weggerichteten Förderrichtung vorgesehen ist.

13. Erntebergungsmaschine nach Anspruch 12, **dadurch gekennzeichnet, daß** zwischen den Umfängen des Förderelements (27) und der Wendel (72, 74) ein Abstand von ca. 5 - 25 mm, vorzugsweise 15 mm, besteht.

## Claims

1. A harvesting machine (10) with a pick-up (30) and an overshot conveyor (32) with at least one conveyor auger (48, 50) arranged downstream of the pick-up (30) and comprising helical flights (72, 74) fitted on an auger core (76), which narrows down the crop fed in from the pick-up (30) into a crop flow, **characterized in that** a crop clearer (82, 84) is provided in the end region of the conveyor auger (48, 50) on the delivery side having a clearing plate (86, 96), which extends between the auger core (76), the axial end of the conveyor auger (48, 50) and a leading side of the helical flight (72, 74).

2. A harvesting machine according to claim 1, **characterized in that** the clearing plate (86, 96) ends at the inner end of the conveyor auger (48, 50) at the outer diameter thereof.

3. A harvesting machine according to claim 1 or 2, **characterized in that** a trailing edge (90) of the clearing plate (86, 96) engages on a leading surface of the helical flight (72, 74).

4. A harvesting machine according to one or more of the preceding claims, **characterized in that** a leading edge (88) of the clearing plate (86, 96) runs substantially parallel to the axis of rotation of the conveyor auger (48, 50).

5. A harvesting machine according to one or more of the preceding claims, **characterized in that** the clearing plate (86, 96) runs spirally out from the auger core (76).

6. A harvesting machine according to one or more of the preceding claims, **characterized in that** an insert plate (94, 102) extends between the clearing plate (86, 96) and the auger core (76).

7. A harvesting machine according to one or more of the preceding claims, **characterized in that** the conveyor auger (48, 50) includes two helical flights (72, 74) offset by 180 degrees, with each of which a clearing plate (86, 96) is associated.

8. A harvesting machine according to one or more of the preceding claims, **characterized in that** the clearing plate (86, 96) extends over about 120 degrees of the periphery of the auger core (76).

9. A harvesting machine according to one or more of the preceding claims, **characterized in that** a rotating entraining member (60) is provided axially following at least one conveyor auger (48, 50), wherein the extent of the clearing plate (86, 96) during circulation extends at least to the height of the entraining member (60).

10. A harvesting machine according to one or more of the preceding claims, **characterized in that** the conveyor auger(s) (48, 50) and the entraining member (60) are mounted on a common drive shaft (52) and are preferably driven in common thereby.

11. A harvesting machine according to one or more of the preceding claims, **characterized in that** the diameter of the auger core (76) amounts to substantially half the diameter of the conveyor auger (48, 50) and the clearing plate (86, 96) runs with a constant radius, whose centre lies on a radial line through the axis of rotation of the auger core (76) and along the end of the helical flight (72, 74).

12. A harvesting machine according to one or more of the preceding claims, **characterized in that** a conveyor element (27) with conveyor direction directed upwardly and away is provided downstream of the conveyor auger(s) (48, 50).

13. A harvesting machine according to claim 12, **characterized in that** a space of about 5 - 25 mm, preferably 15 mm, exists between the peripheries of the conveyor element (27) and of the helical flight (72, 74).

## Revendications

1. Machine de récolte (10) comportant un ramasseur (30) et un convoyeur (32) agissant par le haut et muni d'au moins une vis de transport (48, 50) agencée en aval du ramasseur (30), qui comporte des hélices (72, 74) montée sur un noyau de vis (76) et qui rétrécit les végétaux amenés par le ramasseur (30) en un flux de végétaux, **caractérisée en ce que**, dans la zone d'extrémité du côté sortie de la vis de transport (48, 50), il est prévu un dispositif de débourrage (82, 84) avec une plaque de débourrage (86, 96) qui s'étend entre le noyau de la vis (76), l'extrémité axiale de la vis de transport (48, 50) et une face avant des l'hélices (72, 74).

2. Machine de récolte selon la revendication 1, **caractérisée en ce que** la plaque de débourrage (86, 96) se termine à l'extrémité intérieure de la vis de transport (48, 50) au niveau du diamètre extérieur de celle-ci.

3. Machine de récolte selon la revendication 1 ou 2, **caractérisée en ce qu'**un bord arrière (90) de la plaque de débourrage (86, 96) s'applique contre une face avant de l'hélice (72, 74).

4. Machine de récolte selon une ou plusieurs des revendications précédentes, **caractérisée en ce qu'**un bord avant (88) de la plaque de débourrage (86, 96) est sensiblement parallèle à l'axe de rotation de la vis de transport (48, 50).

5. Machine de récolte selon une ou plusieurs des revendications précédentes, **caractérisée en ce que** la plaque de débourrage (86, 96) s'étend sous forme hélicoïdale vers l'extérieur à partir du noyau de la vis (76).

6. Machine de récolte selon une ou plusieurs des revendications précédentes, **caractérisée en ce qu'**une plaque intercalaire (94, 102) s'étend entre la plaque de débourrage (86, 96) et le noyau de la vis (76).

7. Machine de récolte selon une ou plusieurs des revendications précédentes, **caractérisée en ce que** la vis de transport (48, 50) comporte deux hélices (72, 74) décalées de 180 degrés, à chacune desquelles est associée respectivement une plaque de débourrage (86, 96).

8. Machine de récolte selon une ou plusieurs des revendications précédentes, **caractérisée en ce que** la plaque de débourrage (86, 96) s'étend sur environ 120 degrés sur le pourtour du noyau de la vis (76).

9. Machine de récolte selon une ou plusieurs des revendications précédentes, **caractérisée en ce qu'**il est prévu au moins un taquet d'entraînement (60) rotatif, consécutif dans le sens axial à au moins une vis de transport (48, 50), la plaque de débourrage (86, 96) s'étendant pendant la rotation au moins jusqu'à hauteur du taquet d'entraînement (60).

10. Machine de récolte selon une ou plusieurs des revendications précédentes, **caractérisée en ce que** la/les vis de transport (48, 50) et le taquet d'entraînement (60) sont montés sur un arbre d'entraînement (52) commun et sont actionnés de préférence conjointement par ce dernier.

11. Machine de récolte selon une ou plusieurs des revendications précédentes, **caractérisée en ce que** le diamètre du noyau de la vis (76) est égal sensiblement à la moitié du diamètre de la vis de transport (48, 50) et la plaque de débourrage (86, 96) a un rayon constant dont le milieu se situe sur une radiale à travers l'axe de rotation du noyau de la vis (76) et le long de l'extrémité de l'hélice (72, 74).

12. Machine de récolte selon une ou plusieurs des revendications précédentes, **caractérisée en ce qu'**il est prévu, en aval de la (des) vis de transport (48, 50), un élément de transport (27) avec un sens de transport vers le haut et s'écartant de celle(s)-ci.

13. Machine de récolte selon la revendication 12, **caractérisée en ce qu'**une distance de 5 à 25 mm environ, de préférence 15 mm est laissée entre les surfaces périphériques de l'élément de transport (27) et de l'hélice (72, 74).
